# EUROPÄISCHE PATENTSCHRIFT

(11) **EP 4 602 143 B1**
(45) Veröffentlichungstag und Bekanntmachung des Hinweises auf die Patenterteilung: **02.12.2026**
(21) Anmeldenummer: 23787060.5
(22) Anmeldetag: 06.10.2023
(51) Int. Cl.: C11D 1/62, C11D 1/66, C11D 1/835, C11D 3/48, C11D 11/00

(54) **REINIGUNGSMITTELZUSAMMENSETZUNG UMFASSEND SOPHOROLIPID-TENSID UND EINE ANTIMIKROBIELLE VERBINDUNG**
CLEANING AGENT COMPOSITION COMPRISING SOPHOROLIPID SURFACTANT AND AN ANTIMICROBIAL COMPOUND
COMPOSITION D'AGENT DE NETTOYAGE COMPRENANT UN TENSIOACTIF SOPHOROLIPIDIQUE ET UN COMPOSÉ ANTIMICROBIEN

(30) Priorität: 14.10.2022 DE 102022210850
(43) Veröffentlichungstag der Anmeldung: 20.08.2025
(73) Patentinhaber: Henkel AG & Co. KGaA, 40589 Düsseldorf (DE)
(72) Erfinder: ABDALLAH, Sami, Dubai Silicon Oasis Dubai, P. O. Box 341044 (AE); LECHEHEB, Nedjmah, Dubai Silicon Oasis Dubai, P. O. Box 341044 (AE); EISSA, Hesham, Dubai Silicon Oasis Dubai, P. O. Box 34104 (AE); SCHMIEDEL, Peter, 40591 Düsseldorf (DE)
(86) Internationale Anmeldenummer: PCT/EP2023/077782
(87) Internationale Veröffentlichungsnummer: WO 2024/079003

(56) Entgegenhaltungen:
- CN-A- 111 777 201
- DE-A1- 102013 226 446
- US-A1- 2016 324 747

## Beschreibung

Die vorliegende Erfindung betrifft eine Reinigungsmittelzusammensetzung sowie eine Verwendung zur Reinigung von harten Oberflächen.

An die Konfektions- und Angebotsformen von Reinigungsmittel werden sich kontinuierlich ändernde Anforderungen gestellt. Ein für die Herstellung von Reinigungsmitteln relevanter Trend ist deren Aufkonzentration. Hintergrund dieser Entwicklung sind neben einer höheren Verbraucherakzeptanz aufgrund vereinfachter Handhabung insbesondere Nachhaltigkeitsaspekte, beispielsweise in Bezug auf Transportvolumina und -kosten und die Menge der eingesetzten Verpackungsmittel.

Die Aufkonzentration moderner Reinigungsmittel, insbesondere moderner Flüssigreinigungsmittel, beeinflusst in der Regel deren optische und rheologische Eigenschaften, hat Auswirkungen auf die Lagerstabilität dieser Mittel und kann deren Reinigungsleistung beeinflussen, insbesondere dann, wenn die hohe Konzentration der Aktivstoffe zu Unverträglichkeiten führt.

Darüber hinaus die Aufkonzentration der Reinigungsmittel in der Regel mit dem Einsatz organischer Lösungsmittel einher. Diese Lösungsmittel verbessern die physikalische Stabilität der Reinigungsmittel, zeichnen sich häufig jedoch nur durch eine geringe Reinigungsaktivität aus, weshalb ihr Zusatz nicht zuletzt aus Nachhaltigskeitsgründen in geringstmöglichen Mengen erfolgen sollte. Der Einsatz von wässrigen oder wässrigorganischen Lösungsmittelsystemen bei der Herstellung aufkonzentrierter Flüssigreinigungsmittel ist mit den herkömmlichen reinigungsaktiven Wirkstoffen bisher jedoch nicht vermeidbar.

Aus der Patentanmeldung EP 0 499 434 A1 sind Reinigungsmittel bekannt, die ein eine micellare Phase ausbildendes Tensid und ein weiteres eine lamellare Phase ausbildendes Tensid enthalten, wobei mindestens eines dieser beiden Tenside ein Glykolipid-Biotensid, insbesondere ein Rhamnolipid, Glukoselipid, Sophoroselipid, Trehaloselipid und/oder Cellobioselipid sein muss. Die europäische Patentanmeldung EP 1 445 302 A1 betrifft Reinigungsmittel, die mindestens ein Glykolipid-Biotensid, insbesondere Sophorolipid und/oder Rhamnolipid, und mindestens ein Nicht-Glykolipid-Tensid enthalten, wobei diese sich in einer micellaren Phase befinden. Aus der europäischen Patentanmeldung EP 3 686 265 A1 sind flüssige wässrige Reinigungsmittel bekannt, die anionisches Tensid vom Sulfat- oder Sulfonattyp, Seife, nichtionisches Tensid, Enzym und Sophorolipd enthalten. Die europäische Patentanmeldung EP 3 290 501 A1 betrifft Mittel, die alkoxyliertes Fettsäureamid und ein Glycolipid-Biotensid enthalten, welches ein Sophorolipid sein kann.

Die deutsche Patentanmeldung DE 10 2013 226446 A1 betrifft Mittel zur Reinigung harter Oberflächen enthaltend Sophorolipid.

Der vorliegenden Erfindung lag die Aufgabe zugrunde, reinigungsaktive Wirkstoffe bereitzustellen, welche die Herstellung optisch ansprechender, konzentrierter fließfähiger desinfizierender Reinigungsmittelzubereitungen ermöglichen. Die Wirkstoffe sollten in einfacher und effizienter Weise herstellbar sein, eine gute Lagerfähigkeit aufweisen und sich insbesondere durch gute Reinigungsergebnisse auszeichnen.

Diese Aufgabe wurde durch eine Reinigungsmittelzusammensetzung zur Reinigung von harten Oberflächen, umfassend:
ein Sophorolipid; und
ein antimikrobielles Mittel, welches eine quaternäre Ammoniumverbindung umfasst,
wobei die quaternäre Ammoniumverbindung die allgemeine Formel (I) aufweist:

   N⁺(R¹R²R³R⁴) (I)
wobei die quaternäre Ammoniumverbindung der Formel (I) aufweist:
   zwei Reste mit einer C-Kettenlänge von höchstens 4, insbesondere von 1 aufweist,
   zwei Reste mit einer Kohlenstoffkette von C₈ bis C₁₈ , insbesondere von 12 aufweist.

Gemäß einer bevorzugten Ausführungsform wird eine Reinigungsmittelzusammensetzung beschreiben, wobei das antimikrobielle Mittel Didecyldimethylammoniumchloride ist.

Überraschenderweise wurde festgestellt, dass die Kombination von Sophorolipden und quaternären antimikrobiellen Verbindungen die Reinigungsleistung der Sophorolipide synergistisch steigern kann. Vorteilhafterweise bilden sich dabei keine schwer- oder unlöslichen Niederschläge.

Sophorolipide bestehen aus einem Sophorose-Rest, in dem zwei Glucosemoleküle ß-1,2'-glycosidisch miteinander verknüpft sind, an den eine Hydroxylgruppe einer Hydroxycarbonsäure ß- glycosidisch gebunden ist. Die Hydroxycarbonsäure kann die Hydroxylgruppe am terminalen C-Atom oder an einem im Inneren der Kohlenstoffkette befindlichen C-Atom tragen, und gesättigt oder ungesättigt sein. Beispiele für Sophorolipide sind:

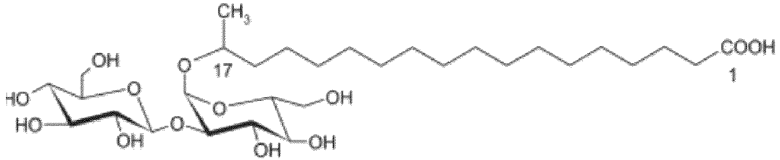

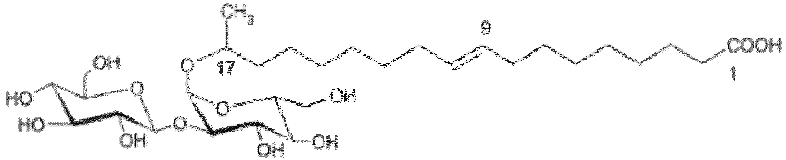

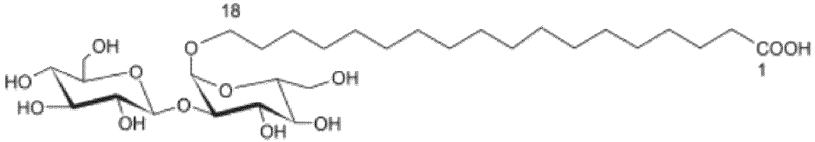

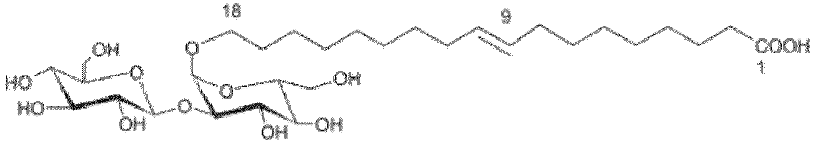

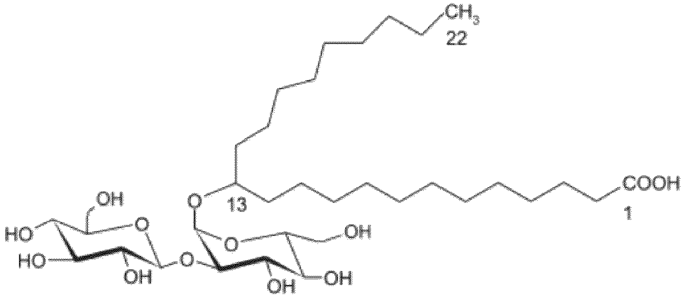

Sie können in der voranstehend beispielhaft gezeigten offenen Form vorliegen oder in Form monomerer oder dimerer Lactone, wie beispielsweise:

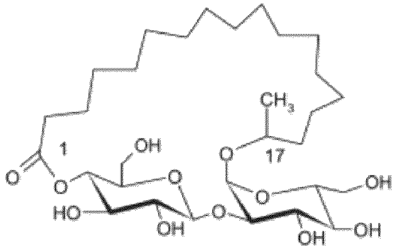

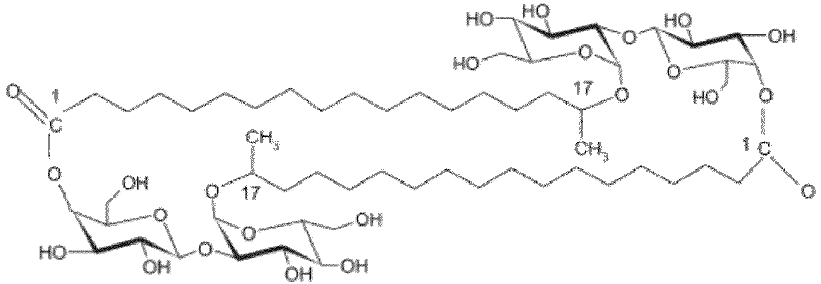

Die offene Form und die Lactonform können auch nebeneinander vorliegen, und beide lassen sich durch intramolekulare Veresterung beziehungsweise Hydrolyse ineinander überführen. In den Verbindungen der Formel (I) liegen die Sophorolipide in der offenen Form vor. Die an den Sophoroseresten der Sophorolipide befindlichen Hydroxylgruppen können auch, vollständig oder anteilig, mit Carbonsäuren verestert vorliegen, wobei als Carbonsäure beispielsweise Essigsäure in Frage kommt, und die primären Hydroxylgruppen als Veresterungspunkte zuvörders in Frage kommen. Sophorolipide werden beispielsweise von Hefen wie Candida albicans, Candida apicola, Candida floricola, Candida kuoi, Candida riodocensis, Candida stellata, Candida tropicalis, Candida parapsilosis, Rhodotorula bajevae, Rhodotorula bogoriensis, Wickerhamiella domercqiae, Wickerhamomyces anomalus und Starmerella bombicola gebildet und konnen aus der Fermentation solcher Mikroorganismen gewonnen werden.

Wie eingangs ausgeführt, eignen sich die Verbindungen der allgemeinen Formel (I) aufgrund ihrer physikalischen Eigenschaften in besonderer Weise als Bestandteile von Reinigungsmitteln, insbesondere von flüssigen Reinigungsmitteln. Wegen ihrer hohen Reinigungskraft kann in solchen Mitteln die Tensidmenge bei gleichbleibender Leistung abgesenkt werden, oder man benötigt eine geringere Menge an den Mitteln, um ein gutes Reinigungsergebnis zu erzielen.

Gemäß einer bevorzugten Ausführungsform wird eine Reinigungsmittelzusammensetzung beschreiben, wobei diese das Sophorolipid und die quaternäre Ammoniumverbindung in einer Menge von insgesamt 0,1 Gew.-% bis 40 Gew.-%, insbesondere 0,2 Gew.-% bis 30 Gew.-% und besonders bevorzugt 0,5 Gew.-% bis 15 Gew.-% enthält.

Als Reinigungsmittel wird eine Zusammensetzung bezeichnet, welche zur Reinigung und Pflege harter Oberflächen geeignet ist und mindestens einen oberflächenreinigenden oder oberflächenpflegenden Aktivstoff enthält. Beispielhafte oberflächenreinigende Aktivstoffe sind Tenside, insbesondere nichtionische und anionische Tenside, und Gerüststoffe, wie Phosphonate oder wasserenthärtende Polymere. Beispielhafte oberflächenpflegende Aktivstoffe sind Korrosionsinhibitoren, wie beispielsweise Zinksalze, und Hydrophobierungsmittel, insbesondere polymere Hydrophobierungsmittel.

Sofern im Zusammenhang mit der vorliegenden Erfindung von einer Reinigungsmittelzusammensetzung gesprochen wird, sind hiermit grundsätzlich desinfizierende Reinigungsmittel zur Reinigung von festen Oberflächen gemeint.

Im Rahmen der vorliegenden Erfindung enthält das Mittel vorzugsweise zusätzlich zur Verbindung der allgemeinen Formel (I) oder der oben definierten erfindungsgemäßen Mischung einen oder mehrere Stoffe aus der Gruppe der nichtionische Tenside, anionischen Tenside, Bleichmittel, Bleichaktivatoren, Enzyme, Elektrolyte, pH-Stellmittel, Parfüme, Parfümträger, Fluoreszenzmittel, Farbstoffe, Hydrotope, Schauminhibitoren, Antiredepositionsmittel, Vergrauungsinhibitoren, Einlaufverhinderer, Knitterschutzmittel, Farbübertragungsinhibitoren, antimikrobiellen Wirkstoffe, nicht-wässrigen Lösungsmittel, Germizide, Fungizide, Antioxidantien, Konservierungsmittel, Korrosionsinhibitoren, Antistatika, Bittermittel, Bügelhilfsmittel, Phobier- und Imprägniermittel, Haut-pflegende Wirkstoffe, Quell- und Schiebefestmittel, weichmachenden Komponenten sowie UV-Absorber.

Gemäß einer bevorzugten Ausführungsform wird eine Reinigungsmittelzusammensetzung beschreiben, wobei die Reinigungsmittelzusammensetzung eine flüssige Reinigungsmittelzusammensetzung ist.

Ebenfalls wird ein Verfahren zur Reinigung von harten Oberflächen beschrieben, wobei die Reinigungsmittelzusammensetzung gemäß einem der vorhergehenden Ansprüche mit einer zu reinigenden harten Oberfläche in Kontakt gebracht wird.

Ein erfindungsgemäßes Reinigungsmittel kann vorzugsweise bis zu 30 Gew.-% weiteres Tensid enthalten, wobei die zusätzlich vorhandenen Tenside vorzugsweise ebenfalls aus nachwachsenden Rohstoffen erhältlich sind.

Gemäß einer bevorzugten Ausführungsform wird eine Reinigungsmittelzusammensetzung beschreiben, wobei diese ein nichtionisches Tensid enthält.

In einer besonderen Aussführungsform der Erfindung enthält das Mittel bis zu 20 Gew.-%, insbesondere 0,5 Gew-% bis 15 Gew.-% nichtionisches Tensid.

Geeignete nichtionische Tenside umfassen alkoxylierte Fettsäurealkylester, Fettsäureamide, alkoxylierte Fettsäureamide, Polyhydroxyfettsäureamide, Alkylphenolpolyglycolether, Aminoxide, Alkylpolyglucoside und Mischungen daraus. Außerdem können als weitere nichtionische Tenside auch Alkylglykoside der allgemeinen Formel R⁵O(G)ₓ eingesetzt werden, in der R⁵ einem primären geradkettigen oder methylverzweigten, insbesondere in 2-Stellung methylverzweigten aliphatischen Rest mit 8 bis 22, vorzugsweise 12 bis 18 C-Atomen entspricht und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse nichtionischer Tenside, die entweder als alleiniges nichtionisches Tensid oder in Kombination mit anderen zusätzlichen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können eingesetzt werden.

Weitere geeignete Tenside sind Polyhydroxyfettsäureamide der Formel, 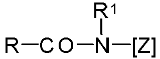 in der R für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgender Acylierung mit einer Fettsäure, einem Fettsäurealkylester oder einem Fettsäurechlorid erhalten werden können. Zur Gruppe der Polyhydroxyfettsäureamide gehören auch Verbindungen der Formel 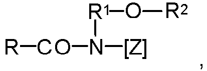 in der R für einen linearen oder verzweigten Alkyl- oder Alkenylrest mit 7 bis 12 Kohlenstoffatomen, R¹ für einen linearen, verzweigten oder zyklischen Alkylrest oder einen Arylrest mit 2 bis 8 Kohlenstoffatomen und R² für einen linearen, verzweigten oder zyklischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden.

Als geeignete peroxidische Bleichmittel kommen insbesondere organische Persäuren oder persaure Salze organischer Säuren, wie Phthalimidopercapronsäure, Perbenzoesäure, Monoperoxyphthalsäure, und Diperdodecandisäure sowie deren Salze wie Magnesiummonoperoxyphthalat, Diacylperoxide, Wasserstoffperoxid und unter den Einsatzbedingungen Wasserstoffperoxid abgebende anorganische Salze, wie Alkaliperborat, Alkalipercarbonat und/oder Alkalipersilikat, und Wasserstoffperoxid-Einschlussverbindungen, wie H₂O₂-Harnstoffaddukte, sowie Mischungen aus diesen in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Besonders bevorzugt wird Alkalipercarbonat, Alkaliperborat-Monohydrat oder Wasserstoffperoxid eingesetzt. Ein im Rahmen der Erfindung einsetzbares Reinigungsmittel enthält peroxidisches Bleichmittel in Mengen von vorzugsweise bis zu 60 Gew.-%, insbesondere von 5 Gew.-% bis 50 Gew.-% und besonders bevorzugt von 15 Gew.-% bis 30 Gew.-% oder alternativ von 2,5 Gew.-% bis 20 Gew.-%, wobei in flüssigen Mitteln Wasserstoffperoxid und in festen Mitteln Natriumpercarbonat das besonders bevorzugte peroxidische Bleichmittel ist. Vorzugsweise weisen peroxidische Bleichmittel-Partikel eine Teilchengröße im Bereich von 10 µm bis 5000 µm, insbesondere von 50 µm bis 1000 µm und/oder eine Dichte von 0,85 g/cm³ bis 4,9 g/cm³, insbesondere von 0,91 g/cm³ bis 2,7 g/cm³ auf.

Als bleichaktivierende, unter Perhydrolysebedingungen Peroxocarbonsäure-liefernde Verbindung können insbesondere Verbindungen, die unter Perhydrolysebedingungen gegebenenfalls substituierte Perbenzoesäure und/oder aliphatische Peroxocarbonsäuren mit 1 bis 12 C-Atomen, insbesondere 2 bis 4 C-Atomen ergeben, allein oder in Mischungen, eingesetzt werden. Geeignet sind Bleichaktivatoren, die O- und/oder N-Acylgruppen insbesondere der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), N-Acylimide, insbesondere N-Nonanoylsuccinimid (NOSI), acylierte Phenolsulfonate oder -carboxylate beziehungsweise die Sulfon- oder Carbonsäuren von diesen, insbesondere Nonanoyl- oder Isononanoyl- oder Lauroyloxybenzolsulfonat (NOBS beziehungsweise iso-NOBS beziehungsweise LOBS) oder Decanoyloxybenzoat (DOBA), deren formale Kohlensäureesterderivate wie 4-(2-Decanoyloxyethoxycarbonyloxy)-benzolsulfonat (DECOBS), acylierte mehrwertige Alkohole, insbesondere Triacetin, Ethylenglykoldiacetat und 2,5-Di-acetoxy-2,5-dihydrofuran sowie acetyliertes Sorbitol und Mannitol und deren Mischungen (SORMAN), acylierte Zuckerderivate, insbesondere Pentaacetylglukose (PAG), Pentaacetyl-fruktose, Tetraacetylxylose und Octaacetyllactose, acetyliertes, gegebenenfalls N-alkyliertes Glucamin und Gluconolacton, und/oder N-acylierte Lactame, beispielsweise N-Benzoylcaprolactam.

Zusätzlich zu den Verbindungen, die unter Perhydrolysebedingungen Peroxocarbonsäuren bilden, oder an deren Stelle können weitere bleichaktivierende Verbindungen, wie beispielsweise Nitrile, aus denen sich unter Perhydrolysebedingungen Perimidsäuren bilden, vorhanden sein. Dazu gehören insbesondere Aminoacetonitrilderivate mit quaterniertem Stickstoffatom gemäß der Formel 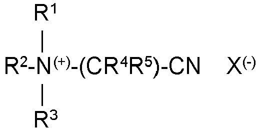 in der R¹ für -H, -CH₃, einen C₂₋₂₄-Alkyl- oder -Alkenylrest, einen substituierten C₁₋₂₄-Alkyl-oder C₂₋₂₄-Alkenylrest mit mindestens einem Substituenten aus der Gruppe -Cl, -Br, -OH, - NH₂, -CN und -N⁽⁺⁾-CH₂-CN, einen Alkyl- oder Alkenylarylrest mit einer C₁₋₂₄-Alkylgruppe, oder für einen substituierten Alkyl- oder Alkenylarylrest mit mindestens einer, vorzugsweise zwei, gegebenenfalls substituierten C₁₋₂₄-Alkylgruppe(n) und gegebenenfalls weiteren Substituenten am aromatischen Ring steht, R² und R³ unabhängig voneinander ausgewählt sind aus -CH₂-CN, -CH₃, -CH₂-CH₃, CH₂-CH2-CH₃, -CH(CH₃)-CH₃,-CH₂-OH, -CH₂-CH₂-OH, -CH(OH)-CH₃, -CH₂-CH₂-CH₂-OH, -CH₂-CH(OH)-CH₃, -CH(OH)-CH₂-CH₃, -(CH₂CH₂-O)ₙH mit n = 1, 2, 3, 4, 5 oder 6, R⁴ und R⁵ unabhängig voneinander eine voranstehend für R¹, R² oder R³ angegebene Bedeutung haben, wobei mindestens 2 der genannten Reste, insbesondere R² und R³, auch unter Einschluss des Stickstoffatoms und gegebenenfalls weiterer Heteroatome ringschließend miteinander verknüpft sein können und dann vorzugsweise einen Morpholino-Ring ausbilden, und X ein ladungsausgleichendes Anion, vorzugsweise ausgewählt aus Benzolsulfonat, Toluolsulfonat, Cumolsulfonat, den C₉₋₁₅-Al-kylbenzolsulfonaten, den C₁₋₂₀-Alkylsulfaten, den C₈₋₂₂-Carbonsäure-methylestersulfonaten, Sulfat, Hydrogensulfat und deren Gemischen, ist, können eingesetzt werden. Unter Perhydrolysebedingungen Peroxocarbonsäuren oder Perimidsäuren bildende Bleichaktivatoren sind vorzugsweise in Mengen bis zu 25 Gew.-%, insbesondere 0,1 Gew.-% bis 10 Gew.-% in erfindungsgemäßen Mitteln vorhanden. Vorzugsweise weisen Bleichaktivator-Partikel eine Teilchengröße im Bereich von 10 µm bis 5000 µm, insbesondere von 50 µm bis 1000 µm und/oder eine Dichte von 0,85 g/cm³ bis 4,9 g/cm³, insbesondere von 0,91 g/cm³ bis 2,7 g/cm³ auf.

Die Anwesenheit von bleichkatalysierenden Übergangsmetallkomplexen, zusätzlich zu oder an Stelle von den genannten Bleichaktivatoren, ist möglich. Diese werden vorzugsweise unter den Cobalt-, Eisen-, Kupfer-, Titan-, Vanadium-, Mangan- und Rutheniumkomplexen ausgewählt. Als Liganden in derartigen Übergangsmetallkomplexen kommen sowohl anorganische als auch organische Verbindungen in Frage, zu denen neben Carboxylaten insbesondere Verbindungen mit primären, sekundären und/oder tertiären Amin- und/oder Alkohol-Funktionen, wie Pyridin, Pyridazin, Pyrimidin, Pyrazin, Imidazol, Pyrazol, Triazol, 2,2'-Bispyridylamin, Tris-(2-pyridylmethyl)amin, 1,4,7-Triazacyclononan, 1,4,7-Trimethyl-1,4,7-triazacyclononan, 1,5,9-Trimethyl-1,5,9-triazacyclododecan, (Bis-((1-methylimidazol-2-yl)-methyl))-(2-pyridylmethyl)-amin, N,N'-(Bis-(1-methylimidazol-2-yl)-methyl)-ethylendiamin, N-Bis-(2-benzimidazolylmethyl)-aminoethanol, 2,6-Bis-(bis-(2-benzimidazolylmethyl)aminomethyl)-4-methylphenol, N,N,N',N'-Tetrakis-(2-benzimidazolylmethyl)-2-hydroxy-1,3-diaminopropan, 2,6-Bis-(bis-(2-pyridylmethyl)aminomethyl)-4-methylphenol, 1,3-Bis-(bis-(2-benzimidazolyl-methyl)aminomethyl)-benzol, Sorbitol, Mannitol, Erythritol, Adonitol, Inositol, Lactose, und gegebenenfalls substituierte Salene, Porphine und Porphyrine gehören. Zu den anorganischen Neutralliganden gehören insbesondere Ammoniak und Wasser. Falls nicht sämtliche Koordinationsstellen des Übergangsmetallzentralatoms durch Neutralliganden besetzt sind, enthält der Komplex weitere, vorzugsweise anionische und unter diesen insbesondere ein- oder zweizähnige Liganden. Zu diesen gehören insbesondere die Halogenide wie Fluorid, Chlorid, Bromid und Iodid, und die (NO₂)⁻-Gruppe, das heißt ein Nitro-Ligand oder ein Nitrito-Ligand. Die (NO₂)⁻-Gruppe kann an ein Übergangsmetall auch chelatbildend gebunden sein oder sie kann zwei Übergangsmetallatome asymmetrisch oder µ1-O-verbrücken. Außer den genannten Liganden können die Übergangsmetallkomplexe noch weitere, in der Regel einfacher aufgebaute Liganden, insbesondere ein- oder mehrwertige Anionliganden, tragen. In Frage kommen beispielsweise Nitrat, Acetat, Trifluoracetat, Formiat, Carbonat, Citrat, Oxalat, Perchlorat sowie komplexe Anionen wie Hexafluorophosphat. Die Anionliganden sollen für den Ladungsausgleich zwischen Übergangsmetall-Zentralatom und dem Ligandensystem sorgen. Auch die Anwesenheit von Oxo-Liganden, Peroxo-Liganden und Imino-Liganden ist möglich. Insbesondere derartige Liganden können auch verbrückend wirken, so dass mehrkernige Komplexe entstehen. Im Falle verbrückter, zweikerniger Komplexe müssen nicht beide Metallatome im Komplex gleich sein. Auch der Einsatz zweikerniger Komplexe, in denen die beiden Übergangsmetallzentralatome unterschiedliche Oxidationszahlen aufweisen, ist möglich. Falls Anionliganden fehlen oder die Anwesenheit von Anionliganden nicht zum Ladungsausgleich im Komplex führt, sind in den gemäß der Erfindung zu verwendenden Übergangsmetallkomplex-Verbindungen anionische Gegenionen anwesend, die den kationischen Übergangsmetall-Komplex neutralisieren. Zu diesen anionischen Gegenionen gehören insbesondere Nitrat, Hydroxid, Hexafluorophosphat, Sulfat, Chlorat, Perchlorat, die Halogenide wie Chlorid oder die Anionen von Carbonsäuren wie Formiat, Acetat, Oxalat, Benzoat oder Citrat. Beispiele für einsetzbare Übergangsmetallkomplex-Verbindungen sind [N,N'-Bis[(2-hydroxy-5-vinylphenyl)-methylen]-1,2-diaminocyclohexan]-mangan-(III)-chlorid, [N,N'-Bis[(2-hydroxy-5-nitrophenyl)-methylen]-1,2-di-amino-cyclohexan]-mangan-(III)-acetat, [N,N'-Bis[(2-hydroxyphenyl)-methylen]-1,2-phenylendiamin]-mangan-(III)-acetat, [N,N'-Bis[(2-hydroxyphenyl)-methylen]-1,2-diaminocyclohexan]-mangan-(III)-chlorid, [N,N'-Bis[(2-hydroxyphenyl)-methylen]-1,2-diaminoethan]-mangan-(III)-chlorid, [N,N'-Bis[(2-hydroxy-5-sulfonatophenyl)-methylen]-1,2-diaminoethan]-mangan-(III)-chlorid, Mangan-oxalatokomplexe, Nitropentammin-cobalt(III)-chlorid, Nitritopentammin-cobalt(III)-chlorid, Hex-ammincobalt(III)-chlorid, Chloropentammin-cobalt(III)-chlorid sowie der Peroxo-Komplex [(NH₃)₅CO-O-O-Co(NH₃)₅]Cl₄.

Als in den Mitteln verwendbare Enzyme kommen solche aus der Klasse der Proteasen, Amylasen, Lipasen, Cutinasen, Pullulanasen, Hemicellulasen, Cellulasen, Oxidasen, Laccasen und Peroxidasen sowie deren Gemische in Frage. Besonders geeignet sind aus Pilzen oder Bakterien, wie Bacillus subtilis, Bacillus licheniformis, Bacillus lentus, Streptomyces griseus, Humicola lanuginosa, Humicola insolens, Pseudomonas pseudoalcaligenes, Pseudomonas cepacia oder Coprinus cinereus gewonnene enzymatische Wirkstoffe. Die Enzyme können an Trägerstoffen adsorbiert und/oder in Hüllsubstanzen eingebettet sein, um sie gegen vorzeitige Inaktivierung zu schützen. Sie sind in den erfindungsgemäßen Reinigungsmitteln vorzugsweise in Mengen bis zu 5 Gew.-%, insbesondere von 0,002 Gew.-% bis 4 Gew.-%, enthalten. Falls das erfindungsgemäße Mittel Protease enthält, weist es vorzugsweise eine proteolytische Aktivität im Bereich von etwa 100 PE/g bis etwa 10 000 PE/g, insbesondere 300 PE/g bis 8000 PE/g auf. Falls mehrere Enzyme in dem erfindungsgemäßen Mittel eingesetzt werden sollen, kann dies durch Einarbeitung der zwei oder mehreren separaten beziehungsweise in bekannter Weise separat konfektionierten Enzyme oder durch zwei oder mehrere gemeinsam in einem Granulat konfektionierte Enzyme durchgeführt werden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln in Mengen von vorzugsweise nicht über 20 Gew.-%, insbesondere von 1,2 Gew.-% bis 17 Gew.-%, enthalten.

Vergrauungsinhibitoren haben die Aufgabe, den von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Die Mittel können gewünschtenfalls einen üblichen Farbübertragungsinhibitor, diesen dann vorzugsweise in Mengen bis zu 2 Gew.-%, insbesondere 0,1 Gew.-% bis 1 Gew.-%, enthalten, der in einer bevorzugten Ausgestaltung ausgewählt wird aus den Polymeren aus Vinylpyrrolidon, Vinylimidazol, Vinylpyridin-N-Oxid oder den Copolymeren aus diesen. Brauchbar sind sowohl Polyvinylpyrrolidone mit Molgewichten von 15 000 g/mol bis 50 000 g/mol wie auch Polyvinylpyrrolidone mit höheren Molgewichten von beispielsweise bis zu über 1 000 000 g/mol, insbesondere von 1 500 000 g/mol bis 4 000 000 g/mol, N-Vinylimidazol/N-Vinylpyrrolidon-Copolymere, Polyvinyloxazolidone, Copolymere auf Basis von Vinylmonomeren und Carbonsäureamiden, pyrrolidongruppenhaltige Polyester und Polyamide, gepfropfte Polyamidoamine und Polyethylenimine, Polyamin-N-Oxid-Polymere und Polyvinylalkohole. Eingesetzt werden können aber auch enzymatische Systeme, umfassend eine Peroxidase und Wasserstoffperoxid beziehungsweise eine in Wasser Wasserstoffperoxid-liefernde Substanz. Der Zusatz einer Mediatorverbindung für die Peroxidase, zum Beispiel eines Acetosyringons, eines Phenolderivats oder eines Phenotiazins oder Phenoxazins, ist in diesem Fall bevorzugt, wobei auch zusätzlich obengenannte polymere Farbübertragungsinhibitorwirkstoffe eingesetzt werden können. Polyvinylpyrrolidon weist vorzugsweise eine durchschnittliche Molmasse im Bereich von 10 000 g/mol bis 60 000 g/mol, insbesondere im Bereich von 25 000 g/mol bis 50 000 g/mol auf. Unter den Copolymeren sind solche aus Vinylpyrrolidon und Vinylimidazol im Molverhältnis 5:1 bis 1:1 mit einer durchschnittlichen Molmasse im Bereich von 5 000 g/mol bis 50 000 g/mol, insbesondere 10 000 g/mol bis 20 000 g/mol bevorzugt. In bevorzugten Ausführungsformen der Erfindung sind die Reinigungsmittel allerdings frei von derartigen zusätzlichen Farbübertragungsinhibitoren.

Reinigungsmittel können als optische Aufheller beispielsweise Derivate der Diaminostilbendisulfonsäure beziehungsweise deren Alkalimetallsalze enthalten, obgleich sie für den Einsatz als ColorReinigungsmittel vorzugsweise frei von optischen Aufhellern sind. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

In einer weiteren bevorzugten Ausführungsform ist ein erfindungsgemäßes Mittel flüssig und enthält bis zu 90 Gew.-%, insbesondere 10 Gew.-% bis 85 Gew.-%, bevorzugt 25 Gew.-% bis 75 Gew.-%, und besonders bevorzugt 35 Gew.-% bis 65 Gew.-% Wasser, wassermischbares Lösungsmittel oder eines Gemisches aus Wasser und wassermischbarem Lösungsmittel. Zu wassermischbaren Lösungsmitteln gehören beispielsweise einwertige Alkohole mit 1 bis 4 C-Atomen, insbesondere Methanol, Ethanol, Isopropanol und tert.-Butanol, Diole und Triole mit 2 bis 4 C-Atomen, insbesondere Ethylenglykol, Propylenglykol und Glycerin, sowie deren Gemische und die aus den genannten Verbindungsklassen ableitbaren Ether. Derartige wassermischbare Lösungsmittel sind in den erfindungsgemäßen Mitteln vorzugsweise in Mengen nicht über 30 Gew.-%, insbesondere von 2 Gew.-% bis 20 Gew.-%, vorhanden. Ein flüssiges Mittel weist vorzugsweise einen pH-Wert von mindestens pH 5,6, insbesondere im Bereich von pH 7 bis pH 9, auf.

In einer weiteren bevorzugten Ausführungsform liegt das erfindungsgemäße Mittel einzeldosierfertig portioniert in einer aus wasserlöslichem Material gebildeten Kammer vor; dann enthält das Mittel vorzugsweise weniger als 15 Gew.-%, insbesondere im Bereich von 1 Gew.-% bis 12 Gew.-% Wasser. Eine Portion ist eine eigenständige Dosiereinheit mit mindestens einer Kammer, in der zu dosierendes Gut enthalten ist. Eine Kammer ist ein durch Wandungen (zum Beispiel durch eine Folie) abgegrenzter Raum, welcher auch ohne das zu dosierende Gut (gegebenenfalls unter Veränderung seiner Form) existieren kann. Bei einer Oberflächenbeschichtung oder einer Schicht einer Oberflächenbeschichtung handelt es sich somit nicht um eine Wandung gemäß der vorliegenden Erfindung.

Dabei sind die Wandungen der Kammer aus einem wasserlöslichen Material. Die Wasserlöslichkeit des Materials kann mit Hilfe eines in einem quadratischen Rahmen (Kantenlänge auf der Innenseite: 20 mm) fixierten quadratischen Films des besagten Materials (Film: 22 x 22 mm mit einer Dicke von 76 µm) nach dem folgenden Messprotokoll bestimmt werden. Besagter gerahmter Film wird in 800 ml auf 20 °C temperiertes, destilliertes Wasser in einem 1 Liter Becherglas mit kreisförmiger Bodenfläche (Fa. Schott, Mainz, Becherglas 1000 ml, niedrige Form) eingetaucht, so dass die Fläche des eingespannten Films im rechten Winkel zur Bodenfläche des Becherglases angeordnet ist, die Oberkante des Rahmens 1 cm unter der Wasseroberfläche ist und die Unterkante des Rahmens parallel zur Bodenfläche des Becherglases derart ausgerichtet ist, dass die Unterkante des Rahmens entlang des Radius der Bodenfläche des Becherglases verläuft und die Mitte der Unterkante des Rahmens über der Mitte des Radius des Becherglasbodens angeordnet ist. Das Material löst sich unter Rühren (Rührgeschwindigkeit Magnetrührer 300 rpm, Rührstab: 5 cm lang) innerhalb von 600 Sekunden derart auf, dass mit dem bloßen Auge keine einzelnen festförmigen Partikel mehr sichtbar sind.

Die Wandungen der Kammern und damit die wasserlöslichen Umhüllungen der erfindungsgemäßen Reinigungsmittel werden vorzugsweise durch ein wasserlösliches Folienmaterial gebildet. Solche wasserlöslichen Verpackungen können entweder durch Verfahren des vertikalen Formfüllversiegelns oder durch Warmformverfahren hergestellt werden.

Das Warmformverfahren schließt im Allgemeinen das Formen einer ersten Lage aus einem wasserlöslichen Folienmaterial zum Bilden von Ausbuchtungen zum Aufnehmen einer Zusammensetzung darin, Einfüllen der Zusammensetzung in die Ausbuchtungen, Bedecken der mit der Zusammensetzung gefüllten Ausbuchtungen mit einer zweiten Lage aus einem wasserlöslichen Folienmaterial und Versiegeln der ersten und zweiten Lagen miteinander zumindest um die Ausbuchtungen herum ein.

Das wasserlösliche Folienmaterial wird vorzugsweise ausgewählt aus Polymeren oder Polymergemischen. Die Umhüllung kann aus einer oder aus zwei oder mehr Lagen von wasserlöslichem Folienmaterial gebildet werden. Die wasserlöslichen Folienmaterialien der ersten Lage und der weiteren Lagen, falls vorhanden, können gleich oder unterschiedlich sein.

Es ist bevorzugt, dass die wasserlösliche Umhüllung Polyvinylalkohol oder ein Polyvinylalkoholcopolymer enthält; besonders bevorzugt besteht sie aus Polyvinylalkohol oder Polyvinylalkoholcopolymer.

Wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Umhüllung einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung der wasserlöslichen Umhüllung geeigneten Folienmaterial können zusätzlich Polymere, ausgewählt aus der Gruppe umfassend Acrylsäure-haltige Polymere, Polyacrylamide, Oxazolin-Polymere, Polystyrolsulfonate, Polyurethane, Polyester, Polyether, Polymilchsäure, und/oder Mischungen der vorstehenden Polymere, zugesetzt sein. Auch die Copolymerisation von solchen Polymeren zugrundeliegenden Monomeren, einzeln oder in Mischungen aus zweien oder mehreren, mit Vinylacetat ist möglich.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus; unter den Estern sind C₁₋₄-Alkylester oder -Hydroxyalkylester bevorzugt. Ebenso bevorzugte Polyvinylalkoholcopolymere umfassen neben Vinylalkohol als weitere Monomere ethylenisch ungesättigte Dicarbonsäuren. Geeignete Dicarbonsäure sind beispielsweise Itaconsäure, Maleinsäure, Fumarsäure und Mischungen daraus, wobei Itaconsäure besonders bevorzugt ist.

Geeignete wasserlösliche Folien zum Einsatz in den Umhüllungen der wasserlöslichen Verpackungen gemäß der Erfindung sind Folien, die von der Firma MonoSol LLC beispielsweise unter der Bezeichnung M8630, C8400 oder M8900 vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray.

Die Reinigungsmittelportion, umfassend das Reinigungsmittel und die wasserlösliche Umhüllung, kann eine oder mehr Kammern aufweisen. Die wasserlöslichen Umhüllungen mit einer Kammer können eine im Wesentlichen formstabile kugel-, rotationsellipsoid-, würfel-, quader- oder kissenförmige Ausgestaltung mit einer kreisförmigen, elliptischen, quadratischen oder rechteckigen Grundform aufweisen. Das Mittel kann in einer oder mehreren Kammern, falls vorhanden, der wasserlöslichen Umhüllung enthalten sein.

In einer bevorzugten Ausführungsform weist die wasserlösliche Umhüllung zwei Kammern auf. In dieser Ausführungsform können beide Kammern jeweils eine feste Teilzusammensetzung oder jeweils eine flüssige Teilzusammensetzung enthalten, oder die erste Kammer enthält eine flüssige und die zweite Kammer eine feste Teilzusammensetzung.

Die Anteile der Mittel, die in den unterschiedlichen Kammern einer wasserlöslichen Umhüllung mit zwei oder mehr Kammern enthalten sind, können dieselbe Zusammensetzung aufweisen. Vorzugsweise weisen die Mittel in einer wasserlöslichen Umhüllung mit mindestens zwei Kammern jedoch Teilzusammensetzungen auf, die sich mindestens in einem Inhaltsstoff und/oder in dem Gehalt mindestens eines Inhaltsstoffes unterscheiden. Vorzugsweise weist eine Teilzusammensetzung solcher erfindungsgemäßer Mittel Enzym und/oder Bleichaktivator auf und eine getrennt davon vorliegende weitere Teilzusammensetzung weist peroxidisches Bleichmittel auf, wobei dann die erstgenannte Teilzusammensetzung insbesondere kein peroxidisches Bleichmittel und die zweitgenannte Teilzusammensetzung insbesondere kein Enzym und keinen Bleichaktivator aufweist.

Flüssige beziehungsweise pastöse erfindungsgemäße Mittel in Form von Wasser übliche Lösungsmittel enthaltenden Lösungen werden in der Regel durch einfaches Mischen der Inhaltsstoffe, die in Substanz oder als Lösung in einen automatischen Mischer gegeben werden können, hergestellt.

### Beispiele

Bei dem Verfahren wird ein mit Prüfschmutz behandelter Weißschmutzträger mit einem im Prüfling getränkten Schwamm unter definierten Bedingungen abgewischt. Die Reinigungsleistung wird photoelektrisch gemessen gegen einen unbehandelten weißen Schmutzträger (= 100 % Weiß-Grad). Die Grundzüge des Prüfverfahrens wurden 1986 als Qualitätsstandards in der Zeitschrift "Seifen-Ole-Fette-Wachse", 112. Jahrgang, Heft 10, Seiten 371-372 veröffentlicht.

| Beispiel | | % Weiß-Grad | % Schmutzentfernung |
|---|---|---|---|
| C1 | | 35.5 | 48.5 |
| C2 | + 0.1% Sophorolipid and no BAC | 36.5 | 49.8 |
| E1 | BAC + 0.1% Sophorolipid | 40.6 | 55.4 |
| E2 | BAC + 0.2% Sophorolipid | 43.1 | 58.8 |

Die Referenzformel ist eine reguläre Desinfektionsmittelformulierung, die nur 0,6 Gew:-% BAC und 0,5 Gew.-% nichtionisches Fettalkoholethoxylat (umfassend 0.25%AS Lutensol XL 70 - C10-Guerbet alcohol alkoxylate + 7 EO und 0.25%AS Galaxy MW 287 - Lauryl Alcohol Ethoxylate-7 Mole) enthält.

Formel II weist zusätzlich zu dem nichtionisches Fettalkoholethoxylat noch ein Sophorlipid (ohne BAC) auf und zeigt keinen signifikanten Vorteil gegenüber der Referenzformel. Das Bild ändert sich, sobald Mischungen aus BAC und Sophorolipiden eingeführt werden, wie es bei E1 und E2 zu sehen ist, die > 5 % mehr Schmutzentfernung bieten und damit über der erforderlichen Signifikanzschwelle liegt.

Durch die Zugabe eines antimikrobiellen Wirkstoffes (BAC) konnte also überraschenderweise gefunden werden, dass die Reinigungsleistung von Sophorolipid Tensiden erheblich verbessert wurde.

## Patentansprüche

1. Reinigungsmittelzusammensetzung zur Reinigung von harten Oberflächen, umfassend:
ein Sophorolipid; und
ein antimikrobielles Mittel, welches eine quaternäre Ammoniumverbindung umfasst,
wobei die quaternäre Ammoniumverbindung die allgemeine Formel (I) aufweist:
N⁺(R¹R²R³R⁴) (I)
wobei die quaternäre Ammoniumverbindung der Formel (I) aufweist:
zwei Reste mit einer C-Kettenlänge von höchstens 4, insbesondere von 1 aufweist,
zwei Reste mit einer Kohlenstoffkette von C₈ bis C₁₈, insbesondere von 12 aufweist.

2. Die Reinigungsmittelzusammensetzung gemäß dem vorhergehenden Anspruch, wobei das antimikrobielle Mittel ein Didecyldimethylammoniumhalogenid, ist, bevorzugt Didecyldimethylammonium chloride.

3. Die Reinigungsmittelzusammensetzung gemäß Anspruch 1, wobei diese das Sophorolipid und die quaternäre Ammoniumverbindung in einer Menge von insgesamt 0,1 Gew.-% bis 40 Gew.-%, insbesondere 0,2 Gew.-% bis 30 Gew.-% und besonders bevorzugt 0,5 Gew.-% bis 15 Gew.-% enthält.

4. Die Reinigungsmittelzusammensetzung gemäß dem vorhergehenden Anspruch, wobei diese bis zu 20 Gew.-%, insbesondere 0,1 Gew-% bis 5 Gew.-% des nichtionischen Tensids enthält.

5. Die Reinigungsmittelzusammensetzung gemäß einem der vorhergehenden Ansprüche, wobei die quaternäre Ammoniumverbindung in einer Menge von 0,001 Gew.-% bis 10 Gew.-%, bevorzugt 0,01 bis 5 Gew.-%, weiter bevorzugt 0,01 bis 2 Gew.-% verwendet wird.

6. Die Reinigungsmittelzusammensetzung gemäß einem der vorhergehenden Ansprüche, wobei die Reinigungsmittelzusammensetzung eine flüssige Reinigungsmittelzusammensetzung ist.

7. Verwendung einer Reinigungsmittelzusammensetzung zur Reinigung von harten Oberflächen, wobei die Reinigungsmittelzusammensetzung umfasst:
ein Sophorolipid; und
ein antimikrobielles Mittel, welches eine quaternäre Ammoniumverbindung umfasst,
wobei die quaternäre Ammoniumverbindung die allgemeine Formel (I) aufweist:
N⁺(R¹R²R³R⁴) (I)
wobei die quaternäre Ammoniumverbindung der Formel (I) aufweist:
zwei Reste mit einer C-Kettenlänge von höchstens 4, insbesondere von 1,
einen Rest mit einer Kohlenstoffkette von C₈ bis C₁₈,
einen Rest mit einer Benzylgruppe; oder
wobei die quaternäre Ammoniumverbindung der Formel (I) aufweist:
zwei Reste mit einer C-Kettenlänge von höchstens 4, insbesondere von 1 aufweist,
zwei Reste mit einer Kohlenstoffkette von C₈ bis C₁₈ , insbesondere von 12 aufweist.

## Claims

1. A cleaning composition for cleaning hard surfaces, comprising:
a sophorolipid; and
an antimicrobial agent comprising a quaternary ammonium compound,
wherein the quaternary ammonium compound has the general formula (I):
N⁺(R¹R²R³R⁴) (I)
wherein the quaternary ammonium compound of formula (I) comprises:
two groups having a carbon chain length of at most 4, in particular 1,
two groups having a carbon chain length of C₈ to C₁₈, in particular 12.

2. The cleaning composition according to the preceding claim, wherein the antimicrobial agent is a didecyl dimethylammonium halide, preferably didecyl dimethylammonium chloride.

3. The cleaning composition according to claim 1, wherein it contains the sophorolipid and the quaternary ammonium compound in a total amount of 0.1 wt.-% to 40 wt.-%, in particular 0.2 wt.-% to 30 wt.-%, and most preferably 0.5 wt.-% to 15 wt.-%.

4. The detergent composition according to the preceding claim, wherein it contains up to 20 wt.%, in particular 0.1 wt.% to 5 wt.%, of the nonionic surfactant.

5. The cleaning composition according to any one of the preceding claims, wherein the quaternary ammonium compound is used in an amount of 0.001% by weight to 10% by weight, preferably 0.01% by weight to 5% by weight, and more preferably 0.01% by weight to 2% by weight.

6. The cleaning composition according to any one of the preceding claims, wherein the cleaning composition is a liquid cleaning composition.

7. Use of a cleaning composition for cleaning hard surfaces, wherein the cleaning composition comprises:
a sophorolipid; and
an antimicrobial agent comprising a quaternary ammonium compound,
wherein the quaternary ammonium compound has the general formula (I):
N⁺(R¹R²R³R⁴) (I)
wherein the quaternary ammonium compound of formula (I) comprises:
two groups having a C-chain length of at most 4, in particular 1,
one group having a carbon chain of C₈ to C₁₈,
one group having a benzyl group; or
wherein the quaternary ammonium compound of formula (I) comprises:
two radicals having a carbon chain length of at most 4, in particular 1,
two radicals having a carbon chain of C₈ to C₁₈, in particular 12.

## Revendications

1. Composition détergente destinée au nettoyage de surfaces dures, comprenant:
un sophorolipide; et
un agent antimicrobien comprenant un composé d'ammonium quaternaire,
le composé d'ammonium quaternaire répondant à la formule générale (I):
N⁺(R¹R²R³R⁴) (I)
dans laquelle le composé d'ammonium quaternaire de formule (I) comporte:
deux radicaux ayant une longueur de chaîne carbonée d'au plus 4, en particulier égale à 1,
deux radicaux ayant une chaîne carbonée de C₈ à C₁₈, en particulier égale à 12.

2. Composition détergente selon la revendication précédente, dans laquelle l'agent antimicrobien est un halogénure de didécyldiméthylammonium, de préférence le chlorure de didécyldiméthylammonium.

3. Composition détergente selon la revendication 1, dans laquelle le sophorolipide et le composé d'ammonium quaternaire sont présents en une quantité totale comprise entre 0,1 % et 40 % en poids, en particulier entre 0,2 % et 30 % en poids, et de préférence entre 0,5 % et 15 % en poids.

4. Composition détergente selon la revendication précédente, dans laquelle l'agent tensioactif non ionique est présent en une quantité allant jusqu'à 20 % en poids, en particulier de 0,1 % à 5 % en poids.

5. Composition détergente selon l'une des revendications précédentes, dans laquelle le composé d'ammonium quaternaire est utilisé en une quantité comprise entre 0,001 % et 10 % en poids, de préférence entre 0,01 et 5 % en poids, et de manière encore plus préférée entre 0,01 et 2 % en poids.

6. Composition détergente selon l'une des revendications précédentes, dans laquelle la composition détergente est une composition détergente liquide.

7. Utilisation d'une composition détergente pour le nettoyage de surfaces dures, ladite composition détergente comprenant :
un sophorolipide ; et
un agent antimicrobien comprenant un composé d'ammonium quaternaire,
ledit composé d'ammonium quaternaire répondant à la formule générale (I):
N⁺(R¹R²R³R⁴) (I)
le composé d'ammonium quaternaire de formule (I) comportant:
deux radicaux ayant une longueur de chaîne carbonée d'au plus 4, en particulier de 1,
un radical ayant une chaîne carbonée de C₈ à C₁₈,
un radical comportant un groupe benzyle; ou
le composé d'ammonium quaternaire de formule (I) comportant:
deux radicaux ayant une longueur de chaîne carbonée d'au plus 4, en particulier de 1,
deux radicaux ayant une chaîne carbonée de C₈ à C₁₈, en particulier de 12.
